# EUROPEAN PATENT APPLICATION

(11) **EP 4 105 472 A1**
(43) Date of publication of application: **21.12.2022**
(21) Application number: 22176655.3
(22) Date of filing: 01.06.2022
(51) Int. Cl.: F02D 37/02, F02D 41/00, F02D 41/08, F02D 41/10, F02D 41/12, F02P 5/15

(54) **A METHOD FOR CONTROLLING AN ENGINE OF A VEHICLE**

(30) Priority: 17.06.2021 IN 202141027140
(71) Applicant: TVS Motor Company Limited, 600006 Chennai (IN)
(72) Inventor: Vedhanayagam, Jayajothi Johnson, 600 006 Chennai (IN); Manickam, Murugesan, 600 006 Chennai (IN); Sivakumar, Arumugam, 600 006 Chennai (IN); Brahmadevan, Venniyode Padmarajan, 600 006 Chennai (IN); Palani, Shunmugasundaram, 600 006 Chennai (IN); Balaji, Vaidyanathan, 600 006 Chennai (IN); Praveenkumar, Arunkumar, 600 006 Chennai (IN)
(74) Representative: Patentanwaltskanzlei Matschnig & Forsthuber OG

(57) **Abstract**

A method for controlling an engine of a vehicle where the engine configured to operate in a first ride mode or a second ride mode. The method has the steps of receiving an input from a user corresponding to ride mode selected by the user, receiving position of a mechanical throttle body of the vehicle, determining whether opening of the mechanical throttle body of the vehicle is lower than a predetermined throttle opening corresponding to the ride mode selected by the user, determining whether a speed of the vehicle is lower than a predetermined vehicle speed corresponding to the ride mode selected by the user, actuating the first ride mode or the second ride mode selected by the user, and controlling the engine in the selected first ride mode or the second ride mode by controlling one or more operating characteristics of the engine.

## Description

### FIELD OF THE INVENTION

The present invention relates to controlling of an engine of a vehicle.

### BACKGROUND OF THE INVENTION

Modern vehicles are increasingly starting to use a ride mode concept to achieve different vehicle characteristics under different riding conditions. Operation of vehicle in different ride modes appropriate for the riding condition extracts best performance and fuel economy from the vehicle. Generally, the implementation of the ride mode concept is done either through an Electronic Throttle Control (ETC) or a Variable Valve Timing (VVT) system.

Electronic Throttle Control is a technology in which mechanical linkage to throttle valve is disconnected and the throttle valve opening is controlled or driven by an engine ECU through an electric motor. The input from the driver of the vehicle corresponding to the throttle opening is provided to engine ECU by means of a sensor and based on the input from the sensor, the engine ECU controls the electric motor integrated in throttle body to open the throttle valve. By means of this electric motor, different air flow in the throttle body is achieved for different ride modes thereby achieving different vehicle operating characteristics. However, in ETC systems, since the throttle opening is controlled automatically, ensuring safe operation under all operating conditions remains highly challenging. Further, ETC system requires introduction of additional components which leads to increased complexity of the system. Furthermore, the response time of ETC is slower when compared to a mechanical throttle body.

On the other hand, Variable valve timing (VVT) is a technology in which either the valve timing or alternatively degree of valve lift is altered based on engine operating condition. By means of this, different flow of the air-fuel mixture into the combustion chamber can be achieved for different ride modes, thereby achieving different operating characteristics. Variable valve timing can be achieved either through mechanical means or through electrical actuators. However, incorporation of a VVT system requires introduction of additional components which leads to increased complexity of the system. Further, since the overall system behaviour of the engine is highly dynamic, ensuring robust working over of a VVT system over an entire lifetime of vehicle is highly challenging.

Thus, there is a need in the art for a method for controlling an engine of a vehicle which addresses at least the aforementioned problems.

### SUMMARY OF THE INVENTION

In one aspect, the present invention is directed towards a method for controlling an engine of a vehicle. The engine is configured to operate in a first ride mode or a second ride mode. The method has the steps of receiving an input from a user corresponding to the first ride mode or the second ride mode selected by the user; receiving position of a mechanical throttle body of the vehicle from a throttle position sensor, determining whether opening of the mechanical throttle body of the vehicle is lower than a predetermined throttle opening corresponding to the first ride mode or the second ride mode selected by the user, determining whether a speed of the vehicle is lower than a predetermined vehicle speed corresponding to the first ride mode or the second ride mode selected by the user, actuating the first ride mode or the second ride mode selected by the user, and controlling the engine in the selected first ride mode or the second ride mode by controlling one or more operating characteristics of the engine corresponding to the selected ride mode.

In an embodiment of the invention, the one or more operating characteristics include ignition timing, opening of an Idle Air Control Valve and amount of fuel being injected into the engine.

In a further embodiment of the invention, the method further has the step of receiving position of the mechanical throttle body of the vehicle from a manifold pressure sensor.

In a further embodiment of the invention, the method further has the step of determining whether a speed of the engine is lower than a predetermined engine speed corresponding to the first ride mode or the second ride mode selected by the user.

In a further embodiment of the invention, the method further has the step of determining whether there are any errors inhibiting selection of the first ride mode or the second ride mode.

In a further embodiment of the invention, the method further has the step of determining whether the vehicle is in an idling condition; and if the first ride mode is selected reducing opening of the Idle Air Control valve and/or retarding ignition timing, and if the second ride mode is selected, increasing opening of the Idle Air Control valve and/or advancing ignition timing.

In a further embodiment of the invention, the method further has the step of determining whether the vehicle is in a crawling condition, and if the first ride mode is selected, reducing opening of the Idle Air Control valve and/or retarding ignition timing, and if the second ride mode is selected, increasing opening of the Idle Air Control valve and/or advancing ignition timing.

In a further embodiment of the invention, the method further has the step of determining whether the vehicle is in an accelerating condition, and if the first ride mode is selected, reducing the amount of fuel being injected to the engine and/or retarding ignition timing, and if the second ride mode is selected, increasing the amount of fuel being injected to the engine and/or advancing ignition timing.

In a further embodiment, the method further has the step of determining whether the vehicle is in a decelerating condition, and if the first ride mode is selected, increasing opening of the Idle air control valve and/or resuming fuel injection at a lower RPM, and if the second ride mode is selected, decreasing opening of the Idle air control valve and/or resuming fuel injection at a higher RPM.

In a further embodiment, the method further has the step of determining whether ignition of the vehicle has been turned on from an off condition within a predetermined time period prior to the said checking, and if the first ride mode is selected, decreasing the amount of fuel being injected into the engine, and if the second ride mode is selected, increasing the amount of the fuel being injected into the engine.

In a further embodiment, the method further has the step of determining whether the engine of the vehicle is operating at a maximum operating speed and retarding the ignition timing and/or cutting off fuel injection to the engine.

In a further embodiment, the method further has the step of determining whether the engine of the vehicle is operating a steady speed, and if the first ride mode is selected, operating a lambda controller delay term in leaner side and reducing the amount of fuel being injected into the engine, and if the second ride mode is selected, operating the lambda controller delay term in richer side and increasing the amount of fuel being injected into the engine.

In another aspect, the present invention relates to vehicle having an internal combustion engine, a mechanical throttle body for controlling air-fuel mixture supplied to the internal combustion engine, a throttle position sensor for sensing a position of the mechanical throttle body and an Engine Control Unit. The Engine Control Unit is configured to receive an input from a user corresponding to a first ride mode or a second ride mode selected by the user, receive the position of the mechanical throttle body from the throttle position sensor, determine whether opening of the mechanical throttle body of the vehicle is lower than a predetermined throttle opening corresponding to the first ride mode or the second ride mode selected by the user, determine whether a speed of the vehicle is lower than a predetermined vehicle speed corresponding to the first ride mode or the second ride mode selected by the user, actuate the first ride mode or the second ride mode selected by the user, and control the engine in the selected first ride mode or the second ride by controlling one or more operating characteristics of the engine corresponding to the selected ride mode.

In an embodiment of the invention, the one or more operating characteristics include ignition timing, opening of an Idle Air Control Valve and amount of fuel being injected into the engine.

In another embodiment of the invention, the vehicle has a manifold sensor for sensing a position of the mechanical throttle body.

In a further embodiment of the invention, the ECU is further configured to determine whether a speed of the engine is lower than a predetermined engine speed corresponding to the first ride mode or the second ride mode selected by the user.

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1 illustrates a method for controlling an engine of a vehicle, in accordance with an embodiment of the invention.
Figure 2 illustrates a block diagram of a system for controlling the engine of the vehicle, in accordance with an embodiment of the invention.
Figure 3 illustrates the method steps involved in controlling of the engine by the ECU under different riding conditions, in accordance with an embodiment of the invention.
Figure 4 illustrates the torque and power curve at different engine speeds in the first ride mode and the second ride mode, in accordance with an embodiment of the invention.
Figure 5 illustrates the engine RPM under different riding conditions in the first ride mode and the second ride mode, in accordance with an embodiment of the invention.
Figure 6 illustrates a closed loop lambda controller output for a lambda controller with no delay term, in accordance with an embodiment of the invention.
Figure 7 illustrates the close loop controller output for a lambda controller with a positive delay term, in accordance with an embodiment of the invention.

### DETAILED DESCRIPTION OF THE INVENTION

The present invention relates to a method of controlling an engine of a vehicle. More particularly, the present invention relates to a method of controlling an engine of a vehicle between more than one ride modes.

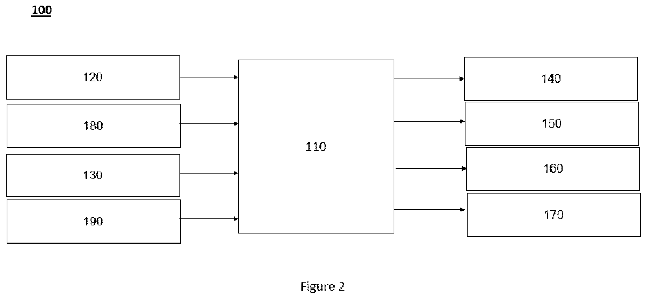

The vehicle as aforementioned has an internal combustion engine that drives the vehicle, a mechanical throttle body for controlling air-fuel mixture supplied to the internal combustion engine and a throttle position sensor 120 (shown in Figure 2) for sensing a position of the mechanical throttle body. The vehicle comprises other sensors such as sensors for vehicle speed 130 (shown in Figure 2) and for other characteristics as might be required. The vehicle further comprises an Engine Control Unit (ECU) 110 (shown in Figure 2) that is in connection with the various sensors in the vehicle and is configured to receive inputs from at least the throttle position sensor, and other such sensors and based on the data received. The ECU 110 is further configured to control the engine of the vehicle as explained hereinunder.

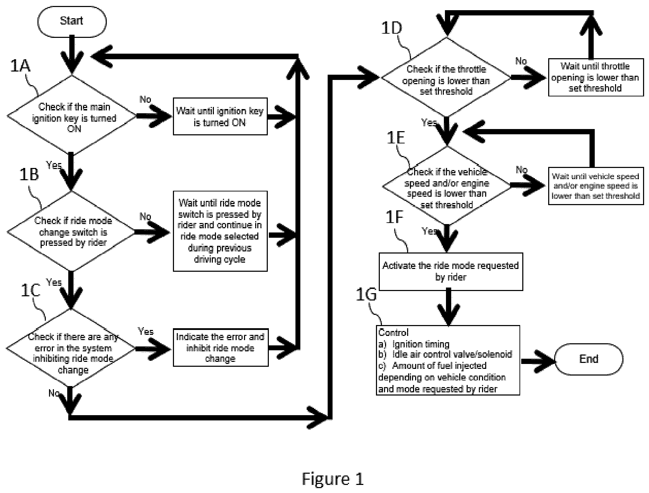

Figure 1 illustrates a method 100 for controlling the engine of the vehicle. The engine herein is configured to operate in either a first ride mode or a second ride mode. The engine operating characteristics corresponding to the first ride mode or the second ride mode differ, as per requirement. In an embodiment, the first ride mode has operating characteristics that make the engine more suitable for operation in an urban traffic condition, while the second ride mode has operating characteristics that make the engine more suitable for a highway or a race track like condition.

As illustrated in Figure 1, at step 1A, the Engine Control Unit (ECU) 110 checks whether an ignition key of the vehicle is an ON condition. If the ignition key is the ON condition, the method moves to step 1B, otherwise step 1A is repeated. At step 1B, the ECU 110 receives an input from a user corresponding to the first ride mode or the second ride mode selected by the user. In an embodiment, the user can select between the first ride mode or the second ride mode by a ride mode switch which can be placed on or in the vicinity of a steering/handlebar assembly. Since the engine is configured to operate in either a first ride mode or a second ride mode, the ECU 110 essentially checks whether the rider has given an input via a ride mode switch for actuation of the first ride mode when the engine is presently in the second ride mode, or for actuation of the second ride mode when the engine is presently in the first ride mode. If an input from the rider has been received, the method 100 moves to step 1C, otherwise the engine continues to operate in the ride mode that the engine is presently in.

At step 1C, the ECU 110 checks whether there are any errors that inhibit the actuation of the selected ride mode. In an embodiment, the errors include an error corresponding to throttle position received by the ECU 110 from the throttle position sensor, an error corresponding to the vehicle speed received by the ECU 110 and an error corresponding to a Control Area Network (CAN) communication between the various sensors and the ECU 110. If an error is detected, the method 100 is reverted to step 1A, otherwise method 100 proceeds to step 1D.

At step 1D, the ECU 110 receives information of position of the mechanical throttle body of the vehicle, from the throttle position sensor 120. In an embodiment, the ECU 110 further receives information of position of the mechanical throttle body of the vehicle, from a manifold pressure sensor 180 (shown in Figure 2). The manifold pressure sensor 180 detects pressure on an intake manifold and transmits the detected value to the ECU 110, based on which, the ECU 110 determines the opening of the mechanical throttle body. The ECU 110 then determines whether opening of the mechanical throttle body of the vehicle is lower than a predetermined throttle opening corresponding to the first ride mode or the second ride mode selected by the user. If the first ride mode is selected by the user when the vehicle was previously in the second ride mode, the throttle opening must be lower than the predetermined throttle opening corresponding to the first ride mode. Similarly, if the second ride mode is selected by the user when the vehicle was previously in the first ride mode, the throttle opening must be lower than the predetermined throttle opening corresponding to the second ride mode. If the opening of the mechanical throttle body is lower than the predetermined throttle opening corresponding to the selected ride mode, the method 100 moves to step 1E, otherwise the method 100 is reverted to step 1D.

At step 1E, the ECU 110 determines whether speed of the vehicle is lower than a predetermined vehicle speed corresponding to the first ride mode or the second ride mode selected by the user. In an embodiment, the ECU 110 determines whether speed of the engine is lower than a predetermined engine speed corresponding to the first ride more or the second ride mode selected by the user. At step 1F, if the ECU 110 determines the opening of the mechanical throttle body to be lower than the predetermined throttle opening and the vehicle speed and/or engine speed to be lower than the predetermined vehicle speed and/or engine speed corresponding to the ride mode selected by the user, the ECU 110 actuates the first ride mode, or the second ride mode selected by the user. If not, the engine continues to operate in the ride mode that the engine was previously operating in. The information of the actuation of the selected ride mode is displayed to the rider on a display panel accompanying the speedometer. In an alternative embodiment, the information of the actuation of the selected ride mode is sent to an application in a communication device connected to the vehicle.

At step 1G, on actuation of the first ride mode or the second ride mode selected by the user, the ECU 110 controls the engine in the selected first ride mode or the second ride mode by controlling one or more operating characteristics of the engine corresponding to the selected ride mode. In an embodiment, the one or more operating characteristics of the engine comprise ignition timing which is controlled by an ignition coil 170 (shown in Figure 2), opening of an Idle Air Control Valve (IACV) 140 (shown in Figure 2) and amount of fuel being injected into the engine by a fuel injector 160 (shown in Figure 2). The Idle Control Valve 140 is a bypass valve which bypasses the throttle body and allows for flow of sufficient air into the engine in conditions where the throttle body is not opened, such as idling, crawling and deceleration. In an embodiment, the Idle Air Control Valve 140 is controlled by a solenoid or a stepper motor. Greater is the opening of the Idle Air Control Valve 140, the more air will flow into the engine.

Figure 2 illustrates a block diagram corresponding to the method 100 of controlling the engine for the vehicle, wherein the ECU 110 receives input from the throttle position sensor 120, the manifold pressure sensor 180, the vehicle speed sensor 130 and other sensors as may be required such as a crank position sensor 190 for determining engine speed. Based on these inputs, the ECU 110 controls the ignition timing, opening of the idle Air Control Valve 140, amount of fuel being injected to the engine in accordance with the vehicle running condition and the ride mode selected by the rider. In an embodiment, the ECU 110 further controls operation of a lambda controller 150 in accordance with the vehicle running condition and the ride mode selected by the rider.

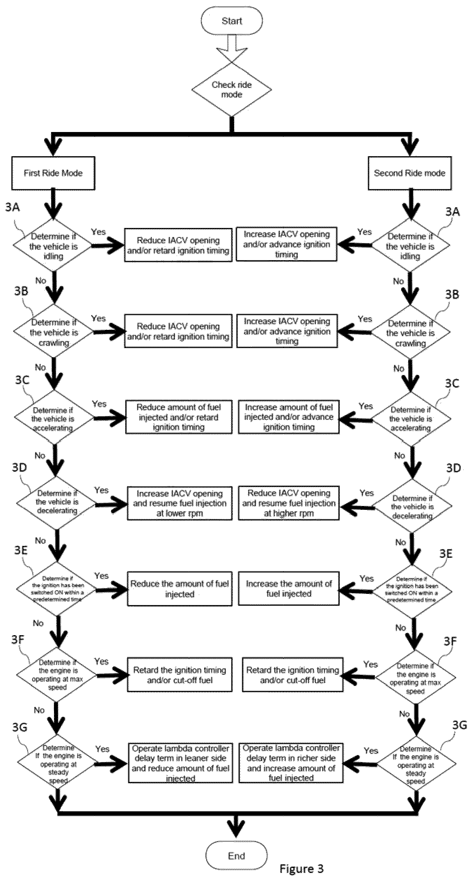

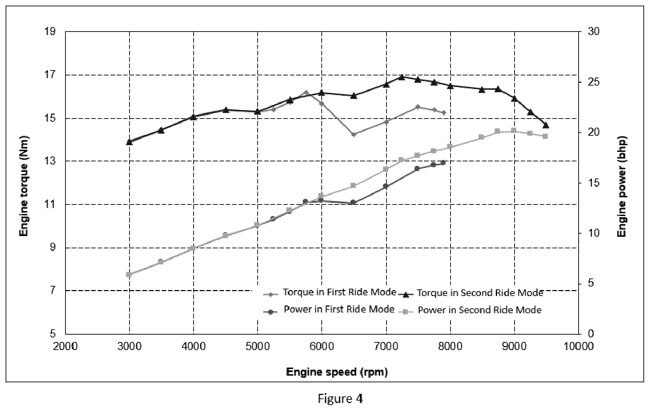

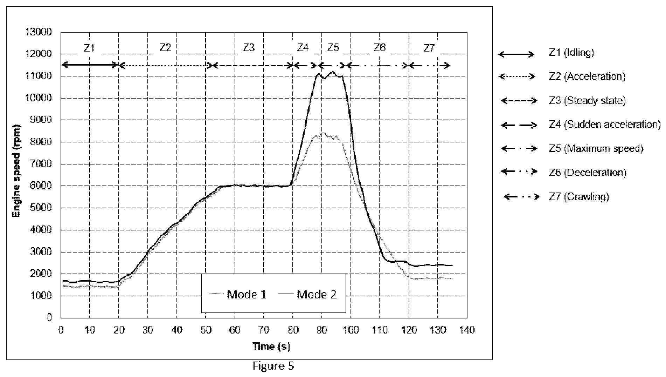

Figure 3 illustrates a flow chart depicting the manner in which the ECU 110 controls the engine under a first ride mode or a second ride mode. Reference is also made to Figure 4 which illustrates the variation in torque produced by the engine, and power produced by the engine in the first ride mode and the second ride mode with increasing RPM. Further, Figure 5 illustrates the variation in RPM under different riding conditions between the first ride mode and the second ride mode.

As illustrated in Figure 3, once the selected ride mode is actuated, the method 100 further comprises a step 3A of determining whether the vehicle is in an idling condition. Reference is made to Figure 5, where the idling condition has been represented by Z1. Different idling RPMs have been set for the first ride mode and the second ride mode. A lower idling RPM in the first ride mode achieves idling smoothness and better fuel economy, while a higher idling RPM in the second ride mode achieves a better low-end pickup feel of the vehicle. If the vehicle is in the idling condition, to achieve the desired idling RPM in the selected ride mode, if the first ride mode is selected, the ECU 110 reduces the opening of the Idle Air Control valve 140 and/or retards ignition timing thereby lowering the engine RPM. Conversely, if the second ride mode is selected, the ECU 110 increases the opening of the Idle Air Control Valve 140 and/or advances ignition timing thereby increasing the engine RPM. The difference between the idling RPMs in the first ride mode and second ride mode can lie between 100-300 RPM.

The method 100 further comprises a step 3B of determining whether the vehicle is in a crawling condition. The vehicle is in a crawling condition in which the rider can manouevre the vehicle without throttle assist. Since there is no throttle assist, the mechanical throttle body is closed and the flow of air to the engine is through the Idle Air Control Valve 140. Reference is made to Figure 5, where the crawling condition has been represented by Z7. Different crawling RPMs have been set for the first ride mode and the second ride mode. A lower crawling RPM in the first ride mode achieves more controllable crawling characteristics which improve rider comfort in urban traffic like conditions, while a higher crawling RPM in the second ride mode achieves better transient and cruising characteristics. If the vehicle is in the crawling condition, to achieve the desired crawling RPM in the selected ride mode, if the first ride mode is selected, the ECU 110 reduces the opening of the Idle Air Control valve 140 and/or retards ignition timing thereby lowering the engine RPM. Conversely, if the second ride mode is selected, the ECU 110 increases the opening of the Idle Air Control Valve 140 and/or advances ignition timing thereby increasing the RPM.

The method 100 further comprises a step 3C of determining whether the vehicle is an accelerating condition. Reference is made to Figure 5, where the accelerating condition has been represented by Z2. Different accelerating condition RPM gradients have been set for the first ride mode and the second ride mode. A lower accelerating condition RPM gradient in the first ride mode achieves smooth and gradual acceleration, while a high accelerating condition RPM gradient in the second ride mode achieves aggressive pickup and acceleration. If the vehicle is in the accelerating condition, to achieve the desired accelerating condition RPM in the selected ride mode, if the first ride mode is selected, the ECU 110 reduces the amount of fuel being injected to the engine and/or retards ignition timing. Conversely, if the second ride mode is selected, the ECU 110 increases the amount of fuel being injected to the engine and/or advancing ignition timing.

The method 100 further comprises a step 3D of determining whether the vehicle is in a decelerating condition. Reference is made to Figure 5, where the decelerating condition has been represented by Z6. Different decelerating condition RPM gradients have been set for the first ride mode and the second ride mode. A lower decelerating condition RPM gradient in the first ride mode achieves deceleration which is smooth and gradual, while a higher decelerating RPM gradient in the second ride mode achieves more aggressive deceleration and engine braking characteristics. If the vehicle is in a decelerating condition, to achieve the desired decelerating condition RPM in the selected ride mode, if the first ride mode is selected, the ECU 110 increases opening of the Idle Air Control valve 140 and/or resumes fuel injection at a lower RPM. Conversely, if the second ride mode is selected, the ECU 110 decreases opening of the Idle Air Control valve 140 and/or resumes fuel injection at a higher RPM.

The method 100 further comprises a step 3E of determining whether ignition of the vehicle has been turned on from an off condition within a predetermined time period prior to the said checking. This corresponds to a condition wherein the engine has been switched on in a cold start and the rider will increase the throttle opening and there will be a sudden increase in the RPM to warm up the engine before moving. Similar engine operating characteristics apply if there is an event of sudden acceleration during vehicle running. The sudden acceleration RPM gradients have been represented in Figure 5 by Z4. A lower sudden acceleration RPM gradient in the first ride mode achieves smoother and slower acceleration, while a higher sudden acceleration RPM gradient in the second ride mode achieves a crispier acceleration feel. If the vehicle is determined to be in the cold start warm-up condition, that is the ignition has been tuned on within a predetermined time, the ECU 110 decreases the amount of fuel being injected into the engine. Conversely, if the second ride mode is selected, the ECU 110 increases the amount of the fuel being injected into the engine. Similarly, when the vehicle is in a sudden acceleration condition, if the first ride mode is selected, the ECU 110 retards the ignition timing and/or en-leans the fuel being injected into the engine by operating the lambda controller 150 to maintain lambda closer to one, thereby achieving better fuel economy and smoother acceleration. Conversely, if the second ride mode is selected, the ECU 110 advances the ignition timing and/or enriches the fuel being injected into the engine by operating the lambda controller 150 to maintain lambda substantially under one, thereby achieving better acceleration feel.

The method 100 further comprises a step 3F of determining whether the engine of the vehicle is operating at the maximum operating speed. Reference is made to Figure 5, where this condition of the engine operating at the maximum operating speed has been represented by Z5. As can be seen in Figure 5, the maximum operating speed of the engine is kept lower in the first ride mode which achieves better fuel economy, and the maximum operating speed of the engine is kept higher in the second ride mode which achieves higher maximum speed. Since, once the maximum operating speed is achieved, the engine requires less fuel to maintain the maximum operating speed, if the ECU 110 determines the engine to be operating at the maximum operating speed, the ECU 110 retards the ignition timing and/or cuts off fuel injection to the engine, irrespective of the ride mode selected. The difference between the maximum operating speed between the two modes can range between 500-3000 RPM resulting in a difference in vehicle speed of between 5-30 km/hr.

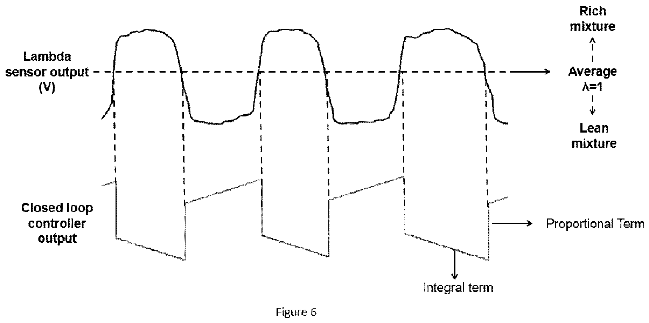

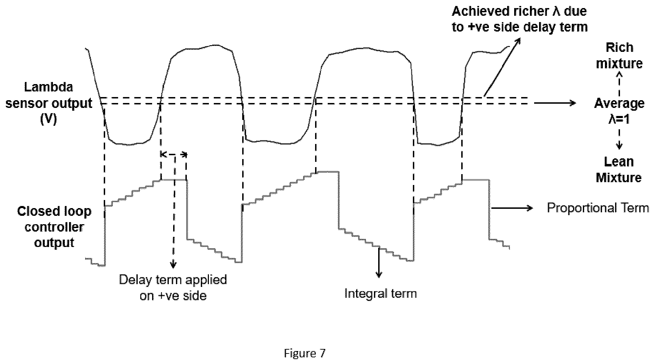

The method further comprises a step 3G of determining whether the engine of the vehicle is operating at a steady speed, i.e. without any significant acceleration or deceleration. Reference is made to Figure 5, where the condition of the engine operating at a steady speed is has been represented by Z3. Even though the steady state RPM in the first ride mode is substantially similar to the steady state RPM in the second ride mode throughout the steady state range, the operating characteristics are controlled differently as when the engine is in steady speed, and the first ride mode is selected, the focus is on achieving greater fuel economy. If the second ride mode is selected, the focus is on achieving better drive feel. To achieve better fuel economy in steady speed in the first ride mode, the ECU 110 operates a lambda controller delay term in leaner side and reduces the amount of fuel being injected into the engine. The shift of the delay terms in the leaner side or the negative side results in average lambda being maintained on the leaner side by reducing the amount of fuel injected into the engine. Conversely to achieve better drive feel in steady speed in the second ride mode, as illustrated in Figure 7, the ECU 110 operates the lambda controller delay term in richer side and increases the amount of fuel being injected into the engine. In an embodiment, the lambda controller 150 comprises a lambda proportional-integral (PI) controller. The shift of the delay term in the richer side or the positive side, as illustrated in Figure 7 in comparison to closed loop controller output with no delay term as illustrated in Figure 6, results in average lambda being maintained on the richer side by increasing the amount of fuel into the engine. This achieves increased engine smoothness and enhanced engine performance.

In another aspect, the present invention relates to a vehicle comprising an internal combustion engine, a mechanical throttle body for controlling air-fuel mixture supplied to the internal combustion engine, a throttle position sensor 120 for sensing a position of the mechanical throttle body, and an Engine Control Unit 110 configured for controlling the engine of the vehicle as explained hereinbefore. In an embodiment, the vehicle further comprises a manifold pressure sensor 180 for sensing the position of the mechanical throttle body.

Advantageously, the present invention provides a method for controlling an engine of a vehicle which ensures improved and more efficient engine performance under all riding conditions maximising the utilisation of vehicle potential, reducing the running costs of the vehicle owing to better fuel economy, enhancing rider comfort, and improving braking and safety.

Further, the present invention does not require a large number of additional components or higher system complexity such as in ECT or VVT, thereby providing a system which is simpler, more robust and less cost intensive to incorporate in a vehicle.

Furthermore, the use of a mechanical throttle body as in the present invention prevents the chances of an abnormal throttle opening or memory overloading. Provision of a mechanical throttle body provides ease of serviceability and maintenance of the throttle body.

While the present invention has been described with respect to certain embodiments, it will be apparent to those skilled in the art that various changes and modification may be made without departing from the scope of the invention as defined in the following claims.

## Claims

1. A method (100) for controlling an engine of a vehicle, the engine configured to operate in a first ride mode or a second ride mode, the method comprising the steps of:
receiving, by an Engine Control Unit (ECU) (110), an input from a user corresponding to the first ride mode or the second ride mode selected by the user;
receiving, by the ECU (110), position of a mechanical throttle body of the vehicle, from a throttle position sensor (120);
determining, by the ECU (110), whether opening of the mechanical throttle body of the vehicle is lower than a predetermined throttle opening corresponding to the first ride mode or the second ride mode selected by the user;
determining, by the ECU (110), whether a speed of the vehicle is lower than a predetermined vehicle speed corresponding to the first ride mode or the second ride mode selected by the user;
actuating, by the ECU (110), the first ride mode or the second ride mode selected by the user; and
controlling, by the ECU (110), the engine in the selected first ride mode or
the second ride mode by controlling one or more operating characteristics of the engine corresponding to the selected ride mode.

2. The method (100) as claimed in claim 1, wherein the one or more operating characteristics comprise ignition timing, opening of an Idle Air Control Valve and amount of fuel being injected into the engine.

3. The method (100) as claimed in claim 1, further comprising the step of receiving, by the ECU (110), position of the mechanical throttle body of the vehicle from a manifold pressure sensor (180).

4. The method (100) as claimed in claim 1, further comprising the step of determining, by the ECU (110), whether a speed of the engine is lower than a predetermined engine speed corresponding to the first ride mode or the second ride mode selected by the user.

5. The method (100) as claimed in claim 1, further comprising the step of determining, by the ECU (110), whether there are any errors inhibiting selection of the first ride mode or the second ride mode.

6. The method (100) as claimed in claim 1, further comprising the steps of:
determining, by the ECU (110), whether the vehicle is in an idling condition; and
if the first ride mode is selected: reducing opening of an Idle Air Control valve (140) and/or retarding ignition timing, and if the second ride mode is selected: increasing opening of the Idle Air Control valve (140) and/or
advancing ignition timing.

7. The method (100) as claimed in claim 1, further comprising the steps of:
determining, by the ECU (110), whether the vehicle is in a crawling condition; and
if the first ride mode is selected: reducing opening of the Idle Air Control valve (140) and/or retarding ignition timing, and if the second ride mode is selected: increasing opening of the Idle Air Control valve (140) and/or advancing ignition timing.

8. The method (100) as claimed in claim 1, further comprising the steps of:
determining, by the ECU (110), whether the vehicle is in an accelerating condition; and
if the first ride mode is selected: reducing the amount of fuel being injected to the engine and/or retarding ignition timing, and if the second ride mode is selected: increasing the amount of fuel being injected to the engine and/or advancing ignition timing.

9. The method (100) as claimed in claim 1, further comprising the steps of:
determining, by the ECU (110), whether the vehicle is in a decelerating condition; and
if the first ride mode is selected: increasing opening of the Idle Air Control Valve (140) and/or resuming fuel injection at a lower RPM, and if the second ride mode is selected: decreasing opening of the Idle Air Control Valve (140) and/or resuming fuel injection at a higher RPM.

10. The method (100) as claimed in claim 1, further comprising the steps of:
determining, by the ECU (110), whether ignition of the vehicle has been turned on from an off condition within a predetermined time period prior to the said checking; and
if the first ride mode is selected: decreasing the amount of fuel being injected into the engine, and if the second ride mode is selected: increasing the amount of the fuel being injected into the engine.

11. The method (100) as claimed in claim 1, further comprising the steps of:
determining, by the ECU (110), whether the engine of the vehicle is operating at a maximum operating speed; and
retarding the ignition timing and/or cutting off fuel injection to the engine.

12. The method (100) as claimed in claim 1, further comprising the steps of:
determining, by the ECU (110), whether the engine of the vehicle is operating a steady speed; and
if the first ride mode is selected: operating a lambda controller delay term in leaner side and reducing the amount of fuel being injected into the engine, and if the second ride mode is selected: operating the lambda controller delay term in richer side and increasing the amount of fuel being injected into the engine.

13. A vehicle, comprising:
an internal combustion engine;
a mechanical throttle body for controlling air-fuel mixture supplied to the internal combustion engine;
a throttle position sensor (120) for sensing a position of the mechanical throttle body; and
an Engine Control Unit (110) configured to:
receive an input from a user corresponding to a first ride mode or a second ride mode selected by the user;
receive the position of the mechanical throttle body from the throttle position sensor (120);
determine whether opening of the mechanical throttle body of the vehicle is lower than a predetermined throttle opening corresponding to the first ride mode or the second ride mode selected by the user;
determine whether a speed of the vehicle is lower than a predetermined vehicle speed corresponding to the first ride mode or the second ride mode selected by the user;
actuate the first ride mode or the second ride mode selected by the user; and
control the engine in the selected first ride mode or the second ride by controlling one or more operating characteristics of the engine corresponding to the selected ride mode.

14. The vehicle as claimed in claim 13, wherein the one or more operating characteristics comprise ignition timing, opening of an Idle Air Control Valve and amount of fuel being injected into the engine.

15. The vehicle as claimed in claim 13, further comprising manifold pressure sensor (180) for sensing the position of the mechanical throttle body.

16. The vehicle as claimed in claim 13, wherein the ECU (110) is further configured to determine whether a speed of the engine is lower than a predetermined engine speed corresponding to the first ride mode or the second ride mode selected by the user.
